(19) Europäisches Patentamt
European Patent Office
Office européen des brevets

(11) Veröffentlichungsnummer: **0 405 244 A1**

# (12) EUROPÄISCHE PATENTANMELDUNG

(21) Anmeldenummer: **90111278.9**

(22) Anmeldetag: **15.06.90**

(51) Int. Cl.5: **A01M 7/00**

(30) Priorität: **28.06.89 DE 3921090**

(43) Veröffentlichungstag der Anmeldung:
**02.01.91 Patentblatt 91/01**

(84) Benannte Vertragsstaaten:
**DE DK FR GB NL**

(71) Anmelder: **Amazonen-Werke H. Dreyer GmbH & Co. KG KG**
**Am Amazonenwerk 9-13**
**D-4507 Hasbergen-Gaste(DE)**

(72) Erfinder: **Oberheide, Friedrich**
**Kiefernweg 15**
**D-4507 Hasbergen(DE)**

(54) **Landwirtschaftliche Feldspritze.**

(57) Landwirtschaftliche Feldspritze mit einem Flüssigkeitstank (1), einer Flüssigkeitspumpe (2), deren Saugleitung (8) im unteren Bereich des Vorratsbehälters (1) mündet. Um auf einfache Weise eine Befülleinrichtung für einen Flüssigkeitstank (1) einer Feldspritze zu schaffen, wobei die Flüssigkeit derart in den Flüssigkeitstank (1) eingeleitet wird, daß eine Schaumbildung auf der Flüssigkeit beim Einfüllen zumindest weitgehend vermieden wird, ist vorgesehen, daß in der Saugleitung (8) zwischen der Flüssigkeitspumpe (2) und dem Flüssigkeitstank (1) ein weiterer Anschluß (18,19) vorgesehen ist, daß dieser Anschluß (18) als Befüllanschluß (19) vorgesehen ist, wobei in der Saugleitung (8) vorzugsweise ein als Dreiwegehahn (12) ausgebildeter Absperrhahn angeordnet ist, in dem der Befüllanschluß (18) mündet.

EP 0 405 244 A1

## LANDWIRTSCHAFTLICHE FELDSPRITZE

Die Erfindung betrifft eine landwirtschaftliche Feldspritze gemäß des Oberbegriffes des Patentanspruches 1.

Eine derartige Feldspritze ist beispielsweise durch die deutsche Offenlegungsschrift 35 33 430 bekannt. Diese landwirtschaftliche Feldspritze wird durch einen Befüllanschluß, der zwischen dem Deckel und dem Sieb angeordnet ist, befüllt. Diese Anordnung des Befüllanschlusses hat viele Nachteile. Insbesondere ist es nachteilig, daß der Behälter von oben befüllt wird, so daß die Schaumbildung relativ groß ist.

Der Erfindung liegt die Aufgabe zugrunde, auf einfache Weise eine Befülleinrichtung für einen Flüssigkeitstank einer Feldspritze zu schaffen, wobei die Flüssigkeit derart in den Flüssigkeitstank eingeleitet wird, daß eine Schaumbildung auf der Flüssigkeit beim Einfüllen zumindest weitgehend vermieden wird. Diese Aufgabe wird erfindungsgemäß dadurch gelöst, daß in der Saugleitung zwischen der Flüssigkeitspumpe und dem Flüssigkeitstank ein weiterer Anschluß vorgesehen ist, daß dieser Anschluß als Befüllanschluß vorgesehen ist, wobei in der Saugleitung vorzugsweise ein als Dreiwegehahn ausgebildeter Absperrhahn angeordnet ist, in dem der Befüllanschluß mündet. Infolge dieser Maßnahmen wird der Flüssigkeitstank von unten her mit Flüssigkeit befüllt. Hierdurch ergibt sich ein ruhiges Einleiten der Flüssigkeit in den Flüssigkeitstank, ohne daß die Flüssigkeit zu stark in Bewegung gerät. Eine Schaumbildung wird weitgehend vermieden.

Um insbesondere den gesetzlichen Vorschriften nachzukommen, ist erfindungsgemäß vorgesehen, daß die Feldspritze einen Flüssigkeitsbehälter aufweist, der in seinem oberen Bereich mit einem Befüllanschluß versehen ist, daß im unteren Bereich eine Ablaufleitung angeordnet ist, die in dem Befüllanschluß des Absperrhahns mündet. Hierdurch wird in einfachster Weise sichergestellt, daß, falls in der Befülleitung eine Saugwirkung entstehen sollte, die sich im Flüssigkeitstank befindliche Flüssigkeit nicht in das öffentliche Wassernetz gesaugt werden kann, weil durch den zusätzlichen Flüssigkeitsbehälter ein Luftpolster vorhanden ist. Hierbei ist vorgesehen, daß zwischen dem Flüssigkeitsbehälter und dem Flüssigkeitstank eine Flüssigkeitsleitung angeschlossen ist, daß im oberen Bereich des Flüssigkeitbehälters ein Wasseranschluß zum Befüllen des Flüssigkeitsbehälters angeordnet ist.

In einfacher Weise kann der Flüssigkeitsbehälter als Spülwasserbehälter ausgebildet sein. Hierdurch wird dann gleichzeitig durch das Befüllen des Flüssigkeitstanks auch der Spülwasserbehälter mit Frischwasser befüllt. Hierbei ist es lediglich erforderlich, das zwischen dem Spülwasserbehälter und dem Flüssigkeitstank ein Absperrhahn angeordnet ist.

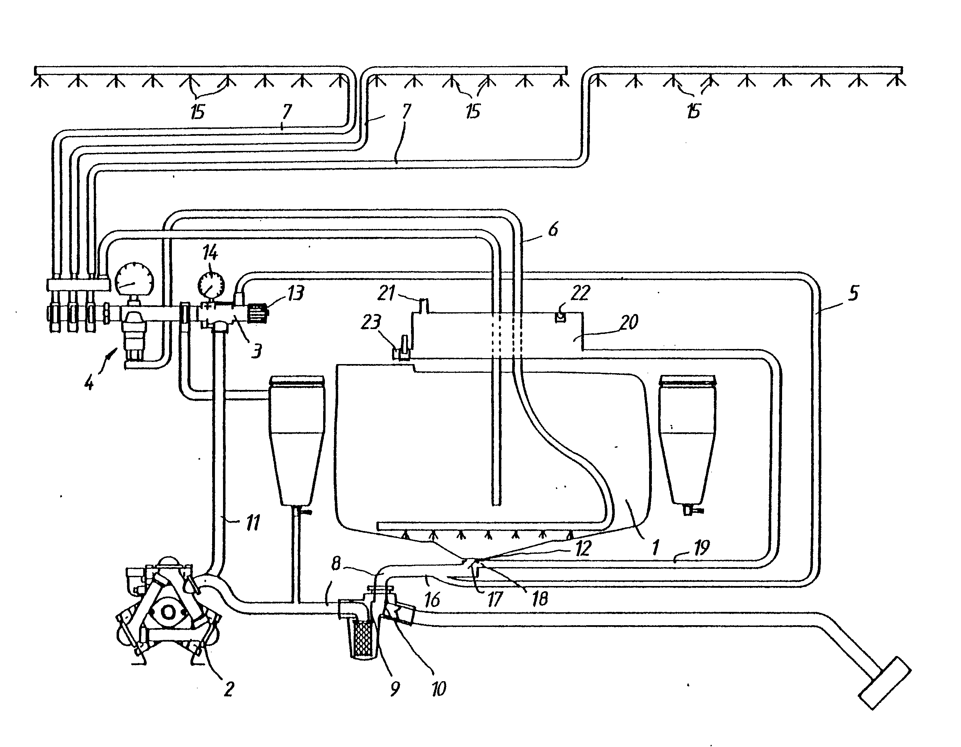

Weitere Einzelheiten der Erfindung sind der Beispielsbeschreibung und den Zeichnungen zu entnehmen. Die Zeichnung zeigt den Anschluß der verschiedenen Leitungen einer Feldspritze in schematischer Darstellungsweise.

Die landwirtschaftliche Feldspritze weist einen Flüssigkeitstank 1, eine Pumpe 2, ein Druckregelventil 3, eine Dosierarmatur 4, die Rücklaufleitung 5, die Rührleitung 6 sowie die Spritzleitungen 7 auf. An dem Boden des Flüssigkeitstanks 1 ist die Saugleitung 8 mit dem Filter 9, der einen Dreiwegehahn 10 aufweist, angeschlossen, welche zu der Pumpe 2 führt. Von der Pumpe 2 führt die Druckleitung 11 zu dem Druckregelventil 3 und der Dosierarmatur 4. Die Pumpe 2 wird in bekannter und daher nicht dargestellter Weise von der Zapfwelle eines Schleppers angetrieben. Die Pumpe 2 saugt über die Saugleitung 8 und den Filter 9 die Spritzflüssigkeit aus dem Flüssigkeitstank durch den an der tiefsten Stelle des Flüssigkeitstanks 1 angeordneten Dreiwegehahn 12 aus dem Flüssigkeitstank 1 an und drückt diese Flüssigkeit über die weiterführende Druckleitung 11 zu dem Druckregelventil 3. Entsprechend den über die Reglerschraube 13 eingestellten Spritzdruck, der an dem Manometer 14 abzulesen ist, wird die gewünschte Flüssigkeitsmenge in bekannter Weise über die Dosierarmatur 4, die für drei Teilbreiten vorgesehen ist, über die an der Dosierarmatur 4 angeschlossenen Leitung 7 den Spritzdüsen 15 zugeführt. Die zuviel von der Pumpe 2 über die Druckleitung 11 zu dem Druckregelventil 3 geförderte Flüssigkeitsmenge wird über die an dem Druckregelventil 3 angeschlossene Rückführleitung an der Stelle 16 der Saugleitung 8 dem Flüssigkeitsvorrat wieder zugeführt. Die Rückführleitung 8 mündet also an der Stelle 16 in der vom Flüssigkeitstank 1 zur Pumpe 2 führenden Saugleitung 8. In der Saugleitung 8 ist zwischen der Pumpe 2 und dem Flüssigkeitstank 8 ein weiterer Anschluß 17, der ein Anschluß 18 des Dreiwegehahns 12 ist, vorgesehen. Der Anschluß 18 ist mit der Befülleitung 19 verbunden, so daß der Anschluß 17 der Befüllanschluß ist. Oberhalb des Flüssigkeitstanks 1 ist der als Spülwasserbehälter 20 ausgebildete Flüssigkeitsbehälter angeordnet. Die Befülleitung 19 ist im unteren Bereich an den Spülwasserbehälter 20 angeschlossen. Der Spülwasserbehälter 20 weist in seinem oberen Bereich den Befüllanschluß 21 auf, an den eine Befülleitung angeschlossen werden kann. Des weiteren weist der Spülwasserbehälter 20 das Belüftungsventil 22

2

auf.

Das Befüllen des Flüssigkeitstanks. 1 über den Spülwasserbehälter 20 geschieht in folgender Weise:

Zunächst wird der Dreiwegehahn 12 in die dargestellte Position gebracht. Anschließend wird an den Befüllanschluß 21 die Wasserzufuhrleitung angeschlossen. Über die Wasserzufuhrleitung und dem Befüllanschluß 21 wird Frischwasser in den Spülwasserbehälter 20 eingeleitet. Über die Befüll-leitung 19 fließt das in dem Spülwasserbehälter 20 eingeleitete Wasser von unten in den Flüssigkeitstank 1. Um den Flüssigkeitstank 1 relativ schnell füllen zu können, wird der Spülwasserbehälter 20 und die Befülleitung 19 durch die an dem Befüllanschluß 21 angeschlossene Wasserzuführleitung unter Druck gesetzt, so daß das Wasser in den Flüssigkeitstank 1 hineingedrückt wird. Durch diesen Druck schließt sich das Belüftungsventil 22.

Des weiteren weist der Spülwasserbehälter 20 den Hahn 23 auf, über welchen Spül- oder Frischwasser entnommen werden kann.

Wenn der Flüssigkeitstank 1 über die Befülleitung 19 und den Spülwasserbehälter 20 gefüllt ist, wird der Dreiwegehahn umgeschaltet, so daß er die Befülleitung 19 absperrt ist. Jetzt kann über die Pumpe 2 und der Saugleitung 8 Flüssigkeit aus dem Flüssigkeitstank 1 in der eingangs beschriebenen Weise abgesaugt und den Spritzdüsen 15 über die Spritzleitung 7 zugeführt werden.

**Ansprüche**

1. Landwirtschaftliche Feldspritze mit einem Flüssigkeitstank, einer Flüssigkeitspumpe, deren Saugleitung im unteren Bereich des Vorratsbehälters mündet, dadurch gekennzeichnet, daß in der Saugleitung (8) zwischen der Flüssigkeitspumpe (2) und dem Flüssigkeitstank (1) ein weiterer Anschluß (18,19) vorgesehen ist, daß dieser Anschluß (18) als Befüllanschluß (19) vorgesehen ist, wobei in der Saugleitung (8) vorzugsweise ein als Dreiwegehahn (12) ausgebildeter Absperrhahn angeordnet ist, in dem der Befüllanschluß (18) mündet.

2. Feldspritze nach Anspruch 1, dadurch gekennzeichnet, daß die Feldspritze enen Flüssigkeitsbehälter (20) aufweist, der in seinem oberen Bereich mit einem Befüllanschluß (21) versehen ist, daß im unteren Bereich eine Ablaufleitung (19) angeordnet ist, die in den Befüllanschluß (18) des Absperrhahns (12) mündet.

3. Feldspritze nach einem oder mehreren der vorstehenden Ansprüche, dadurch gekennzeichnet, daß zwischen dem Flüssigkeitsbehälter (20) und dem Flüssigkeitstank (1) eine Flüssigkeitsleitung (19) angeschlossen ist, daß im oberen Bereich des Flüssigkeitsbehälters (20) ein Wasseranschluß (21) zum Befüllen des Flüssigkeitsbehälters (20) und des Flüssigkeitstanks (1) angeordnet ist.

4. Feldspritze nach einem oder mehreren der vorstehenden Ansprüche, dadurch gekennzeichnet, daß der Flüssigkeitsbehälter (20) als Spülwasserbehälter ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | LANDBOUW MECHANISATIE. vol. 40, no. 12, Dezember 1989, WAGENINGEN Nl Seiten 16 - 19; "DE NIEUWE DOUVEN VELDSPUITEN" * Seiten 18 - 19 * --- | 1-4 | A01M7/00 |
| X | CH-A-669885 (FISCHER S.A.) * Seite 3, linke Spalte, Zeile 7 - rechte Spalte, Zeile 67; Figur * --- | 1-4 | |
| A | DE-C-3630800 (GEBRUDER HOLDER GMBH & CO) --- | | |
| A | LANDTECHNIK. vol. 43, no. 1, Januar 1988, HANNOVER DE Seiten 46 - 48; H.OSTARHILD: "PLANZENSCHUTZTECHNIK: SEHR BREITES ANGEBOT MIT ZAHLREICHEN DETAILVERBESSERUNGEN" ----- | | |

**RECHERCHIERTE SACHGEBIETE (Int. Cl.5)**

A01M
B05B
B60P

Der vorliegende Recherchenbericht wurde für alle Patentansprüche erstellt

| Recherchenort | Abschlußdatum der Recherche | Prüfer |
|---|---|---|
| DEN HAAG | 24 SEPTEMBER 1990 | NEHRDICH H.J |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes Dokument